# DEMANDE DE BREVET EUROPEEN

(11) **EP 4 029 684 A1**
(43) Date de publication de la demande: **20.07.2022**
(21) Numéro de dépôt: 22150503.5
(22) Date de dépôt: 07.01.2022
(51) Int. Cl.: B32B 5/02, B32B 7/023, B32B 9/00, B32B 9/04, B32B 21/08, B32B 21/10, B32B 27/08, B32B 27/12, B32B 27/20, B32B 27/40

(54) **COUCHE COMPOSITE D HABILLAGE ET PIÈCE DE GARNITURE INTÉRIEURE AUTOMOBILE COMPORTANT UNE TELLE COUCHE**

(30) Priorité: 13.01.2021 FR 2100301
(71) Demandeur: SMRC Automotive Holdings Netherlands B.V., 1101 BA Amsterdam (NL)
(72) Inventeur: BONY, Claire, 59128 FLERS-EN-ESCREBIEUX (FR); BROCHOT, Benjamin, 59000 LILLE (FR); PEYNOT, Jane, 59000 LILLE (FR)
(74) Mandataire: Cabinet Nuss

(57) **Abrégé**

L'invention concerne une couche composite d'habillage (1) comprenant une couche support (4) fibreuse, sur laquelle est rapportée une fine couche translucide (5) de matériau naturel organique ou minéral, la face apparente de cette dernière étant elle-même recouverte d'une couche (6) de primaire d'adhésion et d'une couche (7) de vernis, formant la couche superficielle, les couches élémentaires (4, 5, 6, 7) précitées présentant toutes des matériaux constitutifs et des épaisseurs sélectionnés pour autoriser une transmission lumineuse à travers ladite couche composite (1), en particulier pour la réalisation d'effets lumineux (8) par rétroéclairage.

Couche composite (1) caractérisée en ce que la couche support (4) présente des propriétés de diffusion de la lumière à travers elle et est constituée d'un matériau fibreux de couleur claire, préférentiellement blanche, et en ce que la couche de primaire (6) et/ou la couche de vernis (7) intègre(nt) une teinture, des pigments ou une substance colorante analogue.

## Description

La présente invention concerne le domaine du revêtement de surface de pièces structurelles, notamment l'habillage de pièces de garniture intérieure de véhicule automobile, comprenant un substrat ou corps support structurant, et a pour objets une couche composite d'habillage et une pièce de garniture intérieure de véhicule comportant un tel habillage.

La présente invention s'inscrit notamment, mais non limitativement, dans la tendance actuelle visant, dans le cadre de l'équipement intérieur des véhicules, à habiller/décorer des surfaces avec des feuilles ou fines couches de matériaux naturels et à réaliser des effets de lumière par rétro-éclairage, à travers un complexe formé par un empilage de couches, intégrant en particulier une couche en un matériau naturel plus ou moins translucide.

Ces effets lumineux ont notamment pour but de faire apparaitre des décorations particulières, des messages, des logos et/ou des pictogrammes, de créer des halos lumineux, de réaliser un éclairage diffus ou encore de provoquer l'apparition de certaines commandes tactiles ou inductives à activer par l'utilisateur : ces effets lumineux variés étant visibles uniquement lorsque la source de lumière sous la pièce est activé et émet.

Ce concept plait aux utilisateurs et est attractif car il permet de présenter de larges surfaces à l'intérieur des véhicules dénuées de boutons et commandes, et aussi de provoquer des effets de surprise à l'apparition de l'effet lumineux, à un endroit neutre et anodin, ne laissant pas présager un tel effet, également appelé «secret till lit effect» (effet « secret jusqu'à éclairement »).

Par le document FR 3 096 301, on connait déjà une composite d'habillage destinée à recouvrir un substrat rigide, en particulier pour constituer une pièce de garniture intérieure de véhicule automobile, ladite couche composite comprenant une couche support en un textile tissé ou non-tissé, sur laquelle est rapportée une fine couche de matériau naturel organique ou minéral, la face apparente de cette dernière étant elle-même recouverte d'une couche de primaire d'adhésion et d'une couche de vernis, formant la couche superficielle. Ces couches élémentaires précitées qui forment par superposition la couche composite présentent toutes des matériaux constitutifs et des épaisseurs autorisant une transmission lumineuse plus ou moins efficiente à travers ladite couche composite. Un procédé d'habillage de pièces intérieures par une telle couche composite est également connu par ce document.

Les documents US 7 097 913, US2016/0121592, US2015/0343837 et GB 2 541 893 divulguent des réalisations plus ou moins similaires.

Toutefois, dans ces réalisations connues l'aspect visuel du matériau naturel n'est pas suffisamment mis en valeur, voire dégradé ou dénaturé, et elles n'autorisent aucune personnalisation du rendu. De plus, les effets visuels générés sont généralement relativement ténus.

La présente invention a notamment pour but de pallier ces inconvénients.

A cet effet, elle a pour objet une couche composite d'habillage du type évoqué ci-dessus, caractérisé en ce que la couche support fibreuse présente des propriétés de diffusion de la lumière à travers elle et est constituée d'un matériau fibreux de couleur claire, préférentiellement blanche, et en ce que la couche de primaire et/ou la couche de vernis intègre(nt) une teinture, des pigments ou une substance colorante analogue.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

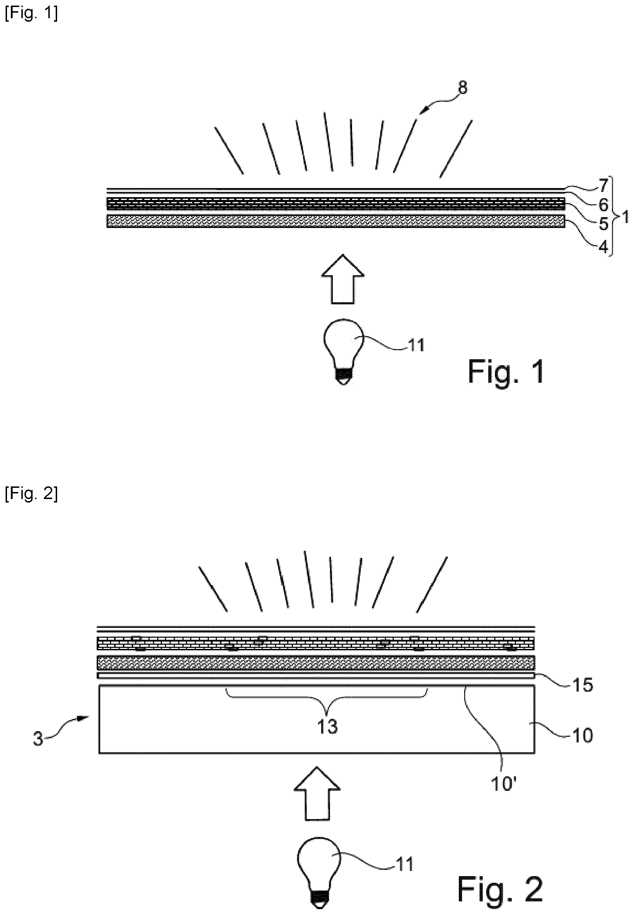

[Fig. 1] représente un vue en coupe d'une couche composite d'habillage selon l'invention ;
[Fig. 2],
[Fig. 3],
[Fig. 4A],
[Fig. 5] et
[Fig. 6A] représentent des vues en coupe, le cas échéant partielles ou localisées, d'une pièce de garniture intérieure de véhicule selon différents modes de réalisation de l'invention, intégrant une couche composite selon la figure 1 ou selon une autre variante de réalisation,

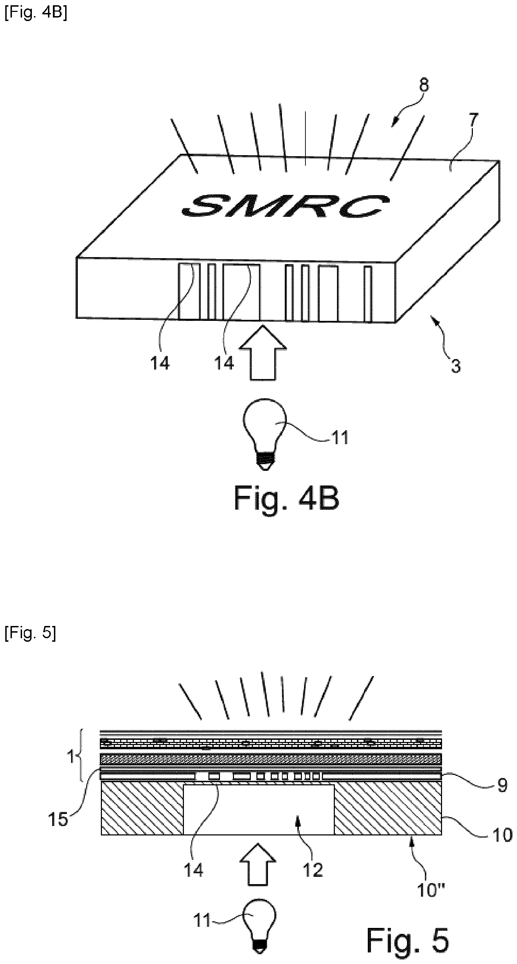

[Fig. 4B] et

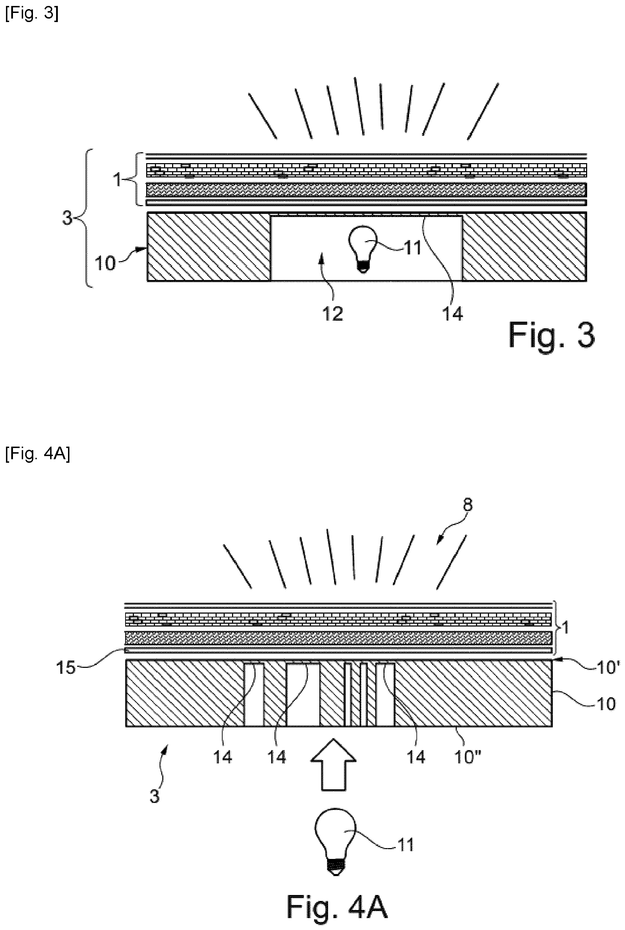

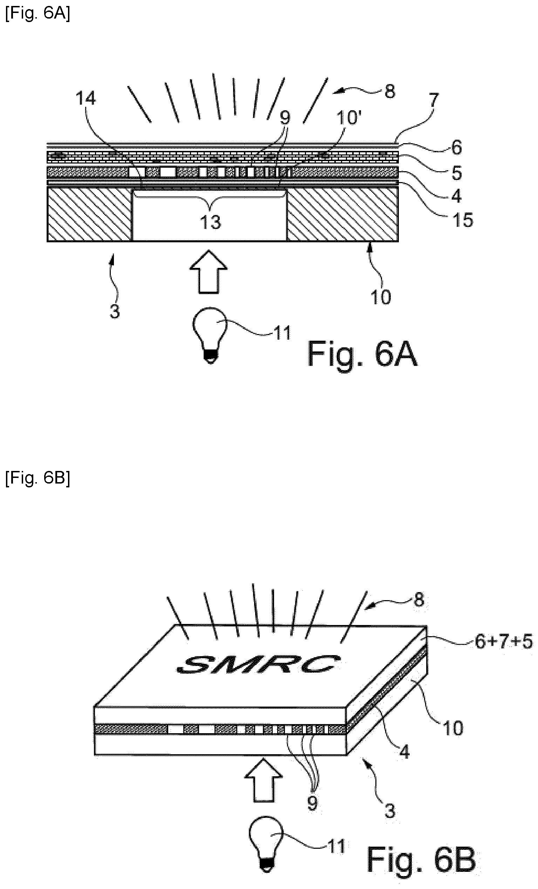

[Fig. 6B] sont des vues en perspective des objets illustrés sur les figures 4A et 6A respectivement, montrant un exemple d'effet lumineux apparaissant en surface.

La figure 1 illustre une composite d'habillage (1) destinée à recouvrir un substrat rigide (10), en particulier pour constituer une pièce (3) de garniture intérieure de véhicule automobile, telle que représentée figures 2 à 6.

Cette couche composite (1) comprend une couche support (4) fibreuse, tel que par exemple un textile tissé, tricoté ou non-tissé, sur laquelle est rapportée une fine couche translucide (5) de matériau naturel organique ou minéral, la face apparente (5') de cette dernière étant elle-même recouverte d'une couche (6) de primaire d'adhésion et d'une couche (7) de vernis, formant la couche superficielle. Les couches élémentaires (4, 5, 6, 7) précitées qui forment par superposition la couche composite (1) présentent toutes des matériaux constitutifs et des épaisseurs sélectionnés pour autoriser une transmission lumineuse à travers ladite couche composite (1), en particulier pour la réalisation d'effets lumineux (8) par rétroéclairage, apparents à la surface de la couche de vernis (7).

Conformément à l'invention, cette couche composite (1) est caractérisée en ce que la couche support (4) présente des propriétés de diffusion de la lumière à travers elle et est constituée d'un matériau fibreux de couleur claire, préférentiellement blanche, et en ce que la couche de primaire (6) et/ou la couche de vernis (7) intègre(nt) une teinture, des pigments ou une substance colorante analogue.

Grâce à ces dispositions, l'invention permet, d'une part, de transmettre une quantité de lumière suffisante pour produire des effets lumineux (8) marqués en surface de la couche(1) et, d'autre part, de fournir au choix un aspect visuel conforme ou non au matériau naturel présent dans la couche composite (1) en l'absence de rétroéclairage.

En effet, la couche de matériau naturel (5) étant suffisamment fine pour être translucide, elle laisse aussi transparaitre la couleur claire voire blanche de sa couche de support textile (4) , qui interfère alors avec la teinte matière de surface, lorsque la source lumineuse (11) située à l'arrière n'est pas activé, donnant, en plein jour, par exemple un rendu de «pierre blanche», alors qu'un aspect de pierre de type ardoise ou mica est recherché, foncé naturel ou teinté à souhait, selon l'effet visuel recherché.

La teinture intégrée dans la couche de primaire (6) et/ou la couche de vernis (7), préférentiellement uniquement dans la couche de vernis transparent superficielle (7), peut présenter soit une coloration correspondant à la teinte du matériau naturel de la couche translucide (5), soit une coloration différente de cette teinte, ce au choix du client par exemple. Il est ainsi possible de profiter de la base neutre coloristiquement fournie par la couleur claire ou blanche de la couche support (4) qui transparait à travers la couche translucide naturelle (5) et neutralise les contrastes et la coloration de cette dernière, pour au choix visuellement soit revenir à la coloration et à l'aspect naturel de la couche (5), soit imposer une coloration et un aspect différents.

De plus, cette couche support (4) qui est de nature souple et est en contact direct par en-dessous avec la mince couche translucide (5) -donc pouvant le cas échéant s'adapter ensemble avec cette dernière à une surface de substrat (10) non plane- assure une diffusion de la lumière provenant d'en dessous vers les couches supérieures (5, 6, 7) et à travers elles vers l'extérieur. Cette propriété optique de diffusion de la lumière de la couche support (4) résulte avantageusement de sa constitution homogène et exclusive de fibres textiles blanchâtres ou claires. La diffusion de la lumière est obtenue par déviation du rayonnement de cette dernière dans diverses directions par interaction avec les fibres claires ou blanches de la couche support (4). L'effet lumineux particulier recherché par l'invention et obtenu par la construction selon l'invention consiste en un effet de halo lumineux, global et diffus, au-delà de cette couche (4).

Avantageusement, la couche de vernis (7) présente un aspect visuel et/ou une topographie de surface structurée (7'), préférentiellement imitant ou accentuant le motif du matériau naturel de la couche translucide (5) et résultant avantageusement d'un traitement spécifique subséquent, par exemple de type mécanique, tel que l'essuyage par exemple.

En réalisant un tel traitement mécanique, de type essuyage par exemple, il est possible de faire apparaitre d'éventuels motifs tels que des lignes, des nœuds, des strates ou des veines, qui s'apparentent aux caractéristiques visuelles de la matière naturelle de la couche (5).

En accord avec une réalisation pratique préférée, il peut être prévu que :
- la couche de vernis (7), transparente ou teintée translucide, présente une épaisseur comprise entre 30 µm et 80 µm, en particulier entre 40 µm et 60 µm et consiste par exemple en une laque PU solvantée, et/ou
- que la couche de primaire (6), transparente ou teintée translucide, présente une épaisseur comprise entre 5 µm et 20 µm, préférentiellement entre 10 µm et 15 µm, et consiste par exemple en un primaire d'adhésion translucide, lequel intègre éventuellement au moins un additif qui compense une perte d'une caractéristique visuelle ou tactile originelle ou ajoute une caractéristique visuelle ou tactile supplémentaire à la coche fine (5) en matériau naturel.

De plus selon des caractéristiques avantageuses de l'invention, il peut être prévu :
- que la couche support (4) fibreuse présente une épaisseur comprise entre 100 µm et 5 mm, préférentiellement entre 0,2 mm et 0,9 mm, et est éventuellement recouverte d'une couche de résine transparente ou translucide, et/ou
- que le matériau naturel formant la fine couche continue translucide (5) soit choisi dans le groupe formé par la pierre, le verre, la céramique, le bois et un alliage d'une résine synthétique avec des éléments (par exemple inclusions du type particules, lamelles, ...) en un des matériaux naturels précités, ladite couche (5) présentant une épaisseur comprise entre 50 µm à 2 mm, préférentiellement entre 0,2 et 0,4 mm, en fonction notamment du type de matériau et de l'effet lumineux (8) recherché.

La couche de support fibreuse (4) présente préférentiellement une structure et une constitution qui offrent un bon compromis entre, d'une part, des performances mécaniques suffisantes pour maintenir la cohérence de la couche composite de décor (1) lors des sollicitations générées pendant l'opération de gainage (recouvrement d'un substrat par cette couche), et/ou provoquées par les utilisateurs dans le véhicule, pour éviter que cette couche (1) de décor ne se craquèle, ne se rompt, ou ne se distende, et, d'autre part, la transparence, translucidité ou ouverture de pores suffisante pour diffuser la lumière.

Cette couche (4) présente en outre avantageusement une structure en feutre, non-tissée, tissée, tricotée ou tricotée avec une maille 3D, voire un mélange de certaines de ces possibilités.

La ou les matières des fibres ou filaments constituant la couche (4) consiste(nt) par exemple en une matière du groupe: polyester PET (polytérephtalate d'éthylène), polypropylène, polyamide, matière cellulosique, coton, lin, sisal, ou un mélange de certain de ces matériaux.

Un liant peut être présent dans la couche (4) pour lier les fibres entre elles et améliorer la résistance à la traction, ou à la déchirure, et/ou donner de la flexibilité ou souplesse (essentiellement dans le cas du feutre ou non -tisséqui peut intégrer des fibres thermo-fusibles et/ou être soumis à un aiguilletage). Le liant peut être du latex, une résine acrylique ou analogue ou intégrer une telle substance.

En fonction de l'effet recherché, la couleur des fibres de la couche (4) st claire, blanche, naturelle, vierge, teintée ou autre en fonction de l'effet recherché.

L'épaisseur de la couche (4) peut aller de 50 µm à 5 mm, ou mieux de 0.1 mm à 1 mm, ou mieux encore de 0,2 mm à 0,5 mm.

Dans le cas de feutre ou de non-tissé, la couche (4) peut présenter :
- un grammage de 10 à 300 g/m² ou mieux de 50 à 250 g/m², ou mieux de 70 à 200g/m², et
- une finesse des fibres : de 1 à 10 dTex.

Dans le cas de structures tissées, la couche (4) peut présenter :
- un grammage de 50 à 500g/m², ou mieux de 70 à 200g/m², et
- une finesse des fibres : de 100 à 2000 dTex.

Enfin, dans le cas de structures tricotées, la couche (4) peut présenter :
- un grammage de 10 à 500g/m², ou mieux de 50 à 300g/m², ou mieux de 70 à 200g/m², et
- une finesse des fils : de 100 à 1000 dTex.

Afin de pouvoir surimposer au moins un signe lumineux sur le motif de fond fourni par la couche translucide de matériau naturel (5), au niveau de la surface apparente de la couche composite (1) lorsque le rétro-éclairage est activé, une couche définissant un motif optiquement contrastant (9), tel qu'un écran ajouré ou un masque, peut être rapportée sur l'une des faces de la couche support (4) être imprimée sur cette couche ou être intégrée dans cette couche (figures 5 et 6A).

La couche composite (1) peut soit être préassemblée pour être ensuite rapportée sur la surface du substrat (10) à habiller, soit être réalisée directement sur ledit substrat (10) par empilage successif des couches élémentaires (4 à 7) précitées. Dans le premier cas, la solidarisation peut se faire par collage (avec une colle 15 ayant des propriétés de transmission lumineuse suffisantes-par exemple une colle PUR base aqueuse).

L'invention concerne également, comme le montrent les figures 2 à 6, une pièce (3) de garniture intérieure de véhicule automobile, comprenant un substrat ou corps support (10) rigide et intégrant ou associée avec au moins un moyen d'éclairage (11), ledit corps support (10) présentant une face apparente (10') depuis laquelle est émise une partie au moins du rayonnement lumineux produit par le moyen d'éclairage (11) et ayant traversé ledit substrat ou corps support (10).

Cette pièce de garniture intérieure (3) est caractérisée en ce qu'au moins la région émettrice (13) de la face apparente (10') est recouverte par une couche composite d'habillage (1) telle que décrite ci-dessus, ledit corps support (10) étant réalisé en un matériau translucide ou transparent et/ou ledit corps support (10) comportant au moins une zone ou région (14) transparente ou translucide du fait d'une épaisseur de matière moindre (figures 3 à 6) ou du fait de la nature du matériau constitutif local (figure 2-matériau translucide ou transparent). Le matériau constitutif est en tout état de cause à diffusion de lumière sensiblement homogène.

Comme le montre la figure 3, le moyen d'éclairage (11) peut être intégré au corps support (10) en étant logé dans une cavité ou une dépression (12) s'étendant depuis la face arrière (10") du corps support (10), opposée à la face apparente (10') ou en étant rapporté sur ladite face arrière (10").

Comme le montre la figure 4A, le corps support (10) peut comporter au moins une zone (14) d'épaisseur réduite ou perforée débouchante, par exemple résultant d'une ablation de matière contrôlée depuis la face arrière (10"), dont le contour détermine la forme de l'effet lumineux (8) produit en surface de la couche (1), lorsque le moyen d'éclairage (11) est actif). Dans ce cas, ledit corps support (10) est avantageusement réalisé en un matériau à constitution homogène (diffusion homogène de la ou des zones 14 d'épaisseur réduite) et sensiblement opaque.

La réalisation de la ou des zones (14) et de la cavité (12) peut se faire par usinage mécanique ou ablation laser.

A la région de l'effet lumineux (8) peut être associé au moins une commande tactile, optique ou inductive, dont l'emplacement est indiqué sélectivement. Une couche ou un élément fonctionnel(le) du type capteur ou commande sensitive, de nature inductive, capacitive ou réagissant à la pression manuelle de l'utilisateur, est alors présent localement en étant intégré dans l'épaisseur de la couche composite (1).

Comme le montre la figure 5, selon une première variante, une couche optiquement contrastante (9), tel qu'un écran ajouré ou un masque en un matériau opaque, peut être présente entre le corps support (10) et la couche (4) en un textile tissé ou non-tissé de la couche composite d'habillage (1). Cette couche (9) peut alors, le cas échéant, aussi assurer la liaison entre la couche (4) et le substrat ou corps (10).

En accord avec d'autres variantes de réalisation de l'invention, la pièce (3) de garniture intérieure peut comprendre un masque de projection (9) sous la forme d'une substance formant un motif optiquement contrastant (9), qui est rapportée sur la face apparente (10') du corps support (10) ou sur l'une des faces la couche (4) en un textile tissé ou non-tissé de la couche composite d'habillage (1), ou imprimée sur l'une desdites faces de cette couche (4) ou dans l'épaisseur de cette dernière (figure 6A et figure 5 vue selon une seconde variante).

Comme évoqué ci-dessus, le masque (9) précédemment décrit, peut être créé directement sur la couche de support textile (4) :
- soit en lui appliquant une substance opaque (film....), et en la laissant translucide aux endroits souhaités
- soit en la colorant, pigmentant avec une couleur foncée et donc opaque aux endroits souhaités
- soit en lui appliquant un traitement opacifiant localement (ablation ou gravure laser, etc.).

On pourra aussi appliquer des encres, peintures (ou autre substances) translucides colorées à l'endroit du passage lumineux, pour créer des effets colorés, uniformes ou non, des dégradés ou analogues.

Il est aussi possible de mettre en œuvre une technique d'impression telle que décrite dans le document EP 3 268 228 pour décorer ou colorer l'aspect du matériau naturel ou réaliser les masques décrits précédemment.

L'homme du métier comprend, à la lecture de ce qui précède, que l'invention offre un large panel de variabilité d'aspects. Ainsi par exemple avec une base type mica ou ardoise pour la couche translucide (5), le fait d'utiliser une couche (4) de support textile non-tissé blanc, provoque un blanchiment de l'aspect de couche fine de pierre en surface, qui perd sa couleur d'origine : cela offre une base neutre (coloristiquement parlant) qui peut être alors reteintée de n'importe quelle couleur.

Ainsi, avec par exemple seulement deux bases minérales (Mica et Ardoise) il est possible de « contretyper » une multitude d'essence de pierres différentes.

De ce fait, l'utilisateur peut adapter la couleur de l'aspect « pierre » apparent à sa guise.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Couche composite d'habillage (1) destinée à recouvrir un substrat rigide (10), en particulier pour constituer une pièce (3) de garniture intérieure de véhicule automobile, ladite couche composite (1) comprenant une couche support (4) fibreuse, tel que par exemple un textile tissé, tricoté ou non-tissé, sur laquelle est rapportée une fine couche translucide (5) de matériau naturel organique ou minéral, la face apparente (5') de cette dernière étant elle-même recouverte d'une couche (6) de primaire d'adhésion et d'une couche (7) de vernis, formant la couche superficielle, les couches élémentaires (4, 5, 6, 7) précitées qui forment par superposition la couche composite (1) présentant toutes des matériaux constitutifs et des épaisseurs sélectionnés pour autoriser une transmission lumineuse à travers ladite couche composite (1), en particulier pour la réalisation d'effets lumineux (8) par rétroéclairage, apparents à la surface de la couche de vernis (7),
couche composite (1) **caractérisée en ce que** la couche support (4) présente des propriétés de diffusion de la lumière à travers elle et est constituée d'un matériau fibreux de couleur claire, préférentiellement blanche, et **en ce que** la couche de primaire (6) et/ou la couche de vernis (7) intègre(nt) une teinture, des pigments ou une substance colorante analogue.

2. Couche composite d'habillage (1) selon la revendication 1, **caractérisée en ce que** la teinture intégrée dans la couche de primaire (6) et/ou la couche de vernis (7), préférentiellement uniquement dans la couche de vernis transparent superficielle (7), présente une coloration correspondant à la teinte du matériau naturel de la couche translucide (5).

3. Couche composite d'habillage (1) selon la revendication 1, **caractérisée en ce que** la teinture intégrée dans la couche de primaire (6) et/ou la couche de vernis (7), préférentiellement uniquement dans la couche de vernis transparent superficielle (7), présente une coloration différente de la teinte du matériau naturel de la couche translucide (5).

4. Couche composite d'habillage (1) selon l'une quelconque des revendications 1 à 3, **caractérisée en ce que** la couche de vernis (7) présente un aspect visuel et/ou une topographie de surface structurée (7'), préférentiellement imitant ou accentuant le motif du matériau naturel de la couche translucide (5) et résultant avantageusement d'un traitement spécifique subséquent.

5. Couche composite d'habillage (1) selon la revendication 4, **caractérisée en ce que** l'aspect visuel et/ou la topographie de surface structurée (7') de la couche de vernis (7) résulte d'un traitement subséquent de type mécanique, tel que l'essuyage par exemple.

6. Couche composite d'habillage (1) selon l'une quelconque des revendications 1 à 5, **caractérisée en ce que** la couche de vernis (7), transparente ou teintée translucide, présente une épaisseur comprise entre 30 µm et 80 µm, en particulier entre 40 µm et 60 µm et consiste par exemple en une laque PU solvantée, **en ce que** la couche de primaire (6), transparente ou teintée translucide, présente une épaisseur comprise entre 5 µm et 20 µm, préférentiellement entre 10 µm et 15 µm, et consiste par exemple en un primaire d'adhésion translucide, lequel intègre éventuellement au moins un additif qui compense une perte d'une caractéristique visuelle ou tactile originelle ou ajoute une caractéristique visuelle ou tactile supplémentaire à la coche fine (5) en matériau naturel.

7. Couche composite d'habillage (1) selon l'une quelconque des revendications 1 à 6, **caractérisée en ce que** la couche support (4) fibreuse présente une épaisseur comprise entre 100 µm et 5 mm, préférentiellement entre 0,2 mm et 0,9 mm, et est éventuellement recouverte d'une couche de résine transparente ou translucide et **en ce que** le matériau naturel formant la fine couche continue translucide (5) est choisi dans le groupe formé par la pierre, le verre, la céramique, le bois et un alliage d'une résine synthétique avec des éléments en un des matériaux naturels précités, ladite couche (5) présentant une épaisseur comprise entre 50 µm à 2 mm, préférentiellement entre 0,2 et 0,4 mm, en fonction notamment du type de matériau et de l'effet lumineux (8) recherché.

8. Couche composite d'habillage (1) selon l'une quelconque des revendications 1 à 7, **caractérisée en ce qu'**une couche définissant un motif optiquement contrastant (9), tel qu'un écran ajouré ou un masque, est rapportée sur l'une des faces de la couche support (4), imprimée sur cette couche ou intégrée dans cette couche.

9. Pièce (3) de garniture intérieure de véhicule automobile, comprenant un substrat ou corps support (10) rigide et intégrant ou associée avec au moins un moyen d'éclairage (11), ledit corps support (10) présentant une face apparente (10') depuis laquelle est émise une partie au moins du rayonnement lumineux produit par le moyen d'éclairage (11) et ayant traversé ledit substrat ou corps support (10),
pièce de garniture intérieure (3) **caractérisée en ce qu'**au moins la région émettrice (13) de la face apparente (10') est recouverte par une couche composite d'habillage (1) selon l'une quelconque des revendications 1 à 8, ledit corps support (10) étant réalisé en un matériau translucide ou transparent et/ou comportant au moins une zone ou région (14) transparente ou translucide du fait d'une épaisseur de matière moindre ou du fait de la nature du matériau constitutif local.

10. Pièce (3) de garniture intérieure de véhicule automobile selon la revendication 9, **caractérisée en ce que** le moyen d'éclairage (11) est intégré au corps support (10) en étant logé dans une cavité ou une dépression (12) s'étendant depuis la face arrière (10") du corps support (10), opposée à la face apparente (10') ou en étant rapporté sur ladite face arrière (10").

11. Pièce (3) de garniture intérieure de véhicule automobile selon la revendication 9 ou 10, **caractérisée en ce que** le corps support (10) comporte au moins une zone (14) d'épaisseur réduite ou perforée débouchante, par exemple résultant d'une ablation de matière contrôlée depuis la face arrière (10"), dont la forme détermine la forme de l'effet lumineux (8) produit lorsque le moyen d'éclairage (11) est actif.

12. Pièce (3) de garniture intérieure de véhicule automobile selon l'une quelconque des revendications 9 à 11, **caractérisée en ce qu'**une couche optiquement contrastante (9), tel qu'un écran ajouré ou un masque en un matériau opaque, est présente entre le corps support (10) et la couche (4) en un textile tissé ou non-tissé de la couche composite d'habillage (1).

13. Pièce (3) de garniture intérieure de véhicule automobile selon l'une quelconque des revendications 9 à 11, **caractérisée en ce qu'**elle comprend un masque de projection (9) sous la forme d'une substance formant un motif optiquement contrastant (9), qui est rapportée sur la face apparente (10') du corps support (10) ou sur l'une des faces la couche (4) en un textile tissé ou non-tissé de la couche composite d'habillage (1), ou imprimée sur l'une desdites faces de cette couche (4) ou dans l'épaisseur de cette dernière.
